(19) Europäisches Patentamt
European Patent Office
Office européen des brevets

(11) EP 4 394 695 A1

(12) EUROPEAN PATENT APPLICATION

(43) Date of publication:
03.07.2024 Bulletin 2024/27

(21) Application number: 22383296.5

(22) Date of filing: 28.12.2022

(51) International Patent Classification (IPC):
G06T 7/00 (2017.01)          G06T 7/11 (2017.01)
G06T 7/60 (2017.01)

(52) Cooperative Patent Classification (CPC):
G06T 7/0004; G06T 7/11; G06T 7/60;
G06T 2207/10004; G06T 2207/10028;
G06T 2207/20081; G06T 2207/20084;
G06T 2207/20112; G06T 2207/30108

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• Fundacion Centro de Tecnologias de Interaccion
Visual y comunicaciones Vicomtech
20009 San Sebastian (ES)
• Clarios Iberia P&D S.L.
09001 Burgos (ES)
• Ingenet Automatizacion, S.L.
48410 Orozko (ES)

(72) Inventors:
• Sánchez Tapia, Jairo Roberto
Donostia/San Sebastián (ES)
• Saiz Álvaro, Fátima
Donostia/San Sebastián (ES)
• Martín Vesga, Ángel Miguel
Burgos (ES)
• Udaeta San Martín, Xabier
Orozko, Bizkaia (ES)

(74) Representative: Balder IP Law, S.L.
Paseo de la Castellana 93
5ª planta
28046 Madrid (ES)

(54) METHOD AND SYSTEM FOR INSPECTION OF BATTERIES

(57) The present invention relates to methods and systems for inspection of batteries, comprising:
providing (110) a battery comprising blocks of layers (2a, 2b, 2c ..., 2n);
capturing (120), by a 2D computer vision apparatus (4), at least one image of a top portion of the blocks (3) of layers;
capturing (130), by a 3D computer vision apparatus (8), a 3D geometry of the top portion of the blocks of layers;
identifying (140), based on the at least one image, layers of a block (3) of layers of the blocks of layers, the identification being;
estimating (150), based on the 3D geometry, heights of layers of the block (3) of layers, the estimation being captured by the 3D computer vision apparatus (8); and estimating (160) whether the battery (1) comprises an anomaly, the estimation being based on the identification of layers and on the estimated heights of layers.

FIG. 5

EP 4 394 695 A1

## Description

### TECHNICAL FIELD

The present invention relates to the field of computer-aided inspection technics. In particular, it belongs to the field of computer-aided inspection of batteries. The invention is applicable in production line, during the manufacturing and assembling of batteries.

### STATE OF THE ART

The industrial sector is immersed in the 4th Industrial Revolution, characterized by the digitalization of production processes. In many industrial sectors, such as transport (for example, automotive, railway and aeronautics) and energy sectors (for example, solar or wind power), the specificity and precision required in relation to the components integrated in different parts urge manufacturers to implement exhaustive quality controls in the facilities of the suppliers throughout their production processes to ensure that the manufactured product meets the demanding quality standards.

Quality control is implemented to detect errors of the production process. The main objective of quality control is to ensure that minimum quality requirements imposed by the industry and/or requested by the customer are met. However, new challenges are faced as production systems become more automated and improved. On the one hand, manually monitoring each product is time-consuming and costly, and on the other hand, taking the risk of bringing substandard items to market is a risk that should not be run.

Batteries are currently key elements in the transport sector, such as the automotive sector. Nowadays, batteries are mounted within a case and, when all the battery parts are assembled, the case is closed with a case cover. This process is either manual or automated in production line. During this mounting and assembling process, operators may visually inspect the parts being assembled. Typical defects of batteries or battery parts are: damaged separators, incorrect number of separators, incorrect number of plates, pieces of paper over a plate or raised separators. These and other problems can cause malfunctions or premature wear of the battery. Visual inspection of these features is subject to different factors that make it difficult to apply routinely, so it is advisable to apply automatic verification mechanisms.

In the last years, artificial vision techniques have been incorporated in supervision and quality control stages in industrial processes. Machine vision includes a variety of tools capable of obtaining, processing and analyzing images of the physical world, to generate information that can be interpreted and used by a machine through digital processes. For example, accurate readings of size, inconsistencies in color, shape defects, missing parts, consistency of mixture and internal and surface defects in manufactured parts or products can be obtained. Therefore, applying automatic machine vision techniques for quality control during a production process eliminates the subjectivity of inspection, increases productivity by reducing costs and improves product quality.

However, not every industrial process enables straight-forward application of artificial vision techniques. This is the case of batteries, among other reasons, because defects vary a lot among different classes of batteries (e.g., separators being bent at different anglesm at different amount of burr) and batteries have a complex geometry which is different for different batteries.

There is therefore a need to develop a new method and system for inspection of batteries in industrial processes of manufacturing, assembling and/or mounting batteries.

### DESCRIPTION OF THE INVENTION

The present invention aims at overcoming the above-mentioned drawbacks. The present invention provides a system and a method for inspection of batteries. The system and method use a 2D computer vision apparatus, a 3D computer vision apparatus and artificial vision techniques for automatically assessing the quality of the product. The system and method enable to quickly ascertain whether a product meets the required quality standards or not.

A first aspect of the invention relates to a method for inspection of batteries, the method comprising:

 providing a battery comprising a case and blocks of layers, the blocks of layers being within the case;
 capturing, by a 2D computer vision apparatus, at least one image of a top portion of the blocks of layers;
 capturing, by a 3D computer vision apparatus, a 3D geometry of the top portion of the blocks of layers;
 identifying, by the 2D computer vision apparatus, layers of a block of layers of the blocks of layers, the step of identifying comprising processing, by the 2D computer vision apparatus, the at least one image by applying an artificial intelligence algorithm to the at least one image;
 estimating, by the 3D computer vision apparatus, heights of layers of the block of layers, the estimation being based on the 3D geometry captured by the 3D computer vision apparatus; and
 estimating, by the 2D computer vision apparatus and the 3D computer vision apparatus, whether the battery comprises an anomaly, the estimation being based on the identification of layers resulting from the step of identifying the layers and on the estimated heights of layers.

Thereby, the 2D computer vision apparatus, using the algorithm of artificial intelligence, and the 3D computer vision apparatus complement each other so that a broad range of anomalies of batteries may be detected by processing the captured at least one image and the captured 3D geometry.

The algorithm of artificial intelligence may be an algorithm (e.g., a neural network) for identifying objects (e.g., may delimit an image region comprising the object) of an image wherein the algorithm has been trained for identifying the layers to be identified in a battery, for example, by identifying plates and separators. The algorithm of artificial intelligence may output a confidence value associated with each identification (i.e., a value of confidence indicative of degree of confidence in that the identification of the object is an actual image of the real object).

In some embodiments, the method comprises at least one of A) and B):

A) each block of layers of the blocks of layers comprises separators, and the step of identifying layers of a block of layers comprises identifying separators thus obtaining data indicative of a region of each identified separator of the block of layers; the step of identifying separators comprises:

processing, by the 2D computer vision apparatus, the at least one image by applying an artificial intelligence algorithm to the at least one image to determine first boundaries delimiting regions of the at least one image, the first boundaries at least partially comprising one or more separators;

for each boundary of the first boundaries, estimating, by the 2D computer vision apparatus, a total number of the identified separators at least partially contained in the boundary of the first imaginary boundaries;

for each boundary of the first imaginary boundaries, comparing, by the 2D computer vision apparatus, the estimated total number of the identified separators with a predetermined value equal to one; and

for each boundary of the first imaginary boundaries in which the 2D computer vision apparatus determines that the estimated total number of the identified separators at least partially contained in the boundary is more than one, dividing the boundary into two boundaries, thus obtaining data indicative of a region of each identified separator of the block of layers.

B) each block of layers of the blocks of layers comprises plates, and the step of identifying layers of a block of layers comprises identifying plates thus obtaining data indicative of a region of each identified plate of the block of layers; the step of identifying plates comprises:

processing, by the 2D computer vision apparatus, the at least one image by applying an artificial intelligence algorithm to the at least one image to determine second boundaries delimiting regions of the at least one image, the second boundaries at least partially comprising one or more plates;

for each boundary of the second boundaries, estimating, by the 2D computer vision apparatus, a total number of the identified plates at least partially contained in the boundary of the second imaginary boundaries;

for each boundary of the second imaginary boundaries, comparing, by the 2D computer vision apparatus, the estimated total number of the identified plates with a predetermined value equal to one; and

for each boundary of the second imaginary boundaries in which the 2D computer vision apparatus determines that the estimated total number of the identified plates at least partially contained in the boundary is more than one, dividing the boundary into two boundaries, thus obtaining data indicative of a region of each identified plate of the block of layers.

In some embodiments, consecutive plates of the battery are so close to each other that the algorithm of artificial intelligence may include portions of both plates in the same boundary. A) allows detecting these cases and solving them by refining the boundaries, so that each boundary partially or wholly contains merely one separator. B) allows detecting these cases and solving them by refining the boundaries, so that each boundary partially or wholly contains merely one plate.

In some embodiments, each block of layers of the blocks of layers comprises separators, and the step of identifying layers of a block of layers comprises identifying separators; the step of estimating whether the battery comprises an anomaly comprising:

- estimating, by the 2D computer vision apparatus, a total number of separators of the block of layers, the estimation being based on the identified separators;
- comparing, by the 2D computer vision apparatus, a predetermined number with the estimated total number of separators of the block of layers; and

- upon determining, by the 2D computer vision apparatus, that the predetermined number is different than the estimated total number of separators of the block of layers, generating a signal indicative of an anomaly.

Thereby, the method allows detecting a total number of separators which is different than an expected number of separators of the block of layers of the battery.

In some embodiments, each block of layers of the blocks of layers comprises separators, and the step of identifying layers of a block of layers comprises identifying separators thus obtaining data indicative of a confidence value associated with each identified separator; the step of estimating whether the battery comprises an anomaly comprising:

- determining, by the 2D computer vision apparatus, a value of confidence threshold, the determination being optionally based on a standard deviation of the confidence value of each identified separator;
- comparing, by the 2D computer vision apparatus, the value of confidence threshold with each confidence value of the confidence values associated with the identified separators; and
- upon determining, by the 2D computer vision apparatus, that the confidence value associated with an identified separator is lower than the value of confidence threshold, generating a signal indicative of an anomaly.

In this way, the method allows detecting separators which, in the at least one captured image, have relatively low confidence values associated with the identification of said layers (i.e., the separators look different than expected). The confidence value associated with each identified separator is indicative of a degree of reliability of said identification.

In some embodiments, the confidence values associated with separators of the block layers closest to walls delimiting the block of layers are excluded from the comparison with the value of confidence threshold. A reason for this being that the walls may occlude visibility of these separators in the at least one captured image, so that these separators may be inaccurately represented in the at least one captured image.

In some embodiments, each block of layers of the blocks of layers comprises separators, and the step of identifying layers of a block of layers comprises identifying separators thus obtaining data indicative of a confidence value associated with each identified separator of the block of layers; the step of estimating whether the battery comprises an anomaly comprising:

- comparing, by the 2D computer vision apparatus, a distribution of the confidence values associated with the identified separators with a normal distribution;
- upon estimating, by the 2D computer vision apparatus, that the distribution of the confidence values comprises outliers with respect to the normal distribution, generating a signal indicative of an anomaly.

Thereby, the method allows detecting that the confidence values associated with the separators identified within a block do not follow an expected distribution of confidence values and, hence, there should be an anomaly in at least one separator of the block of layers.

The normal distribution may be adjusted to the distribution of the confidence values. The adjustment may be performed, for example, by setting the mean of the normal distribution equal to the mean of the distribution of confidence values, and by setting a variation of the normal distribution equal to the variation of the distribution of the confidence values. The estimation of whether a confidence value is an outlier may be based on percentiles.

In some embodiments, each block of layers of the blocks of layers comprises plates, and the step of identifying layers of a block of layers comprises identifying plates thus obtaining data indicative of a region of each identified plate of the block of layers; the step of estimating whether the battery comprises an anomaly comprising:

- estimating, by the 2D computer vision apparatus, a distance between each pair of consecutive plates of the identified plates, the estimation being based on the data indicative of a region of each identified plate of the block of layers;
- comparing, by the 2D computer vision apparatus, each of the estimated distances with a predetermined threshold value; and
- upon determining, by the 2D computer vision apparatus, that an estimated distance of the estimated distances is lower than the predetermined threshold value, generating a signal indicative of an anomaly.

Thereby, the method allows estimating whether there are "double plates" (i.e., consecutive plates without a separator between the consecutive plates) by setting an appropriate predetermined threshold value.

In some embodiments, each block of layers of the blocks of layers comprises plates, and the step of identifying layers of a block of layers comprises identifying separators and identifying plates thus obtaining data indicative of a region of each identified plate of the block of layers; the step of estimating whether the battery comprises an anomaly comprising:

- estimating, by the 2D computer vision apparatus, a distance between each pair of consecutive plates of the identified plates, the estimation being based on the data indicative of a region of each identified plate of the block of layers;
- estimating, by the 2D computer vision apparatus, a total number of separators of the block of layers, the estimation being based on the identified separators;
- processing, by the 2D computer vision apparatus, the estimated distances and the total number of identified separators to estimate whether the block of layers lacks a plate.

In this way, the method allows estimating whether the number of plates of the block of layers is different than expected.

In some embodiments, the step of processing the estimated distances and the total number of identified separators does not include the processing of estimated distances from and to plates which are closest to the walls delimiting the block of layers. A reason for this is that visibility of said plates may be occluded by the walls and, hence, the representation of said plates in the at least one captured image may be inaccurate.

In some embodiments, the step of estimating whether the battery comprises an anomaly comprises:

- computing, by the 3D computer vision apparatus, a mode of the estimated heights of layers of the block of layers (e.g., a mode of the estimated heights of separators and plates of the block of layers);
- for each layer of the block of layers, computing, by the 3D computer vision apparatus, a difference between the mode and the estimated height of the layer;
- for each layer of the block of layers, comparing, by the 3D computer vision apparatus, an absolute value of the computed difference with a predetermined threshold; and
- upon determining, by the 3D computer vision apparatus, that an absolute value of the computed differences is higher than a predetermined threshold, generating a signal indicative of an anomaly.

Thereby, the method allows detecting layers having a height different from the expected height (e.g., raised separators or pieces of paper over the layers of the block of layers), wherein the layers are part of the same block of layers.

In some embodiments, the step of estimating whether the battery comprises an anomaly comprises:

- estimating, by the 3D computer vision apparatus, heights of layers of the blocks of layers of the battery, the estimation being based on the 3D geometry captured by the 3D computer vision apparatus;
- for each block of layers of the blocks of layers, computing, by the 3D computer vision apparatus, a mode of the estimated heights of the layers of the block of layers (e.g., a mode of the estimated heights of separators and plates of the block of layers);
- computing, by the 3D computer vision apparatus, an average of the computed modes;
- for each block of layers of the blocks of layers, computing, by the 3D computer vision apparatus, a difference between the computed mode of the block of layers and the computed average of the computed modes;
- for each block of layers of the blocks of layers, comparing, by the 3D computer vision apparatus, an absolute value of the computed difference with a predetermined threshold;
- upon determining, by the 3D computer vision apparatus, that an absolute value of the computed differences is higher than a predetermined threshold, generating a signal indicative of an anomaly.

In this way, the method allows detecting a package (i.e., a block of layers) which has been wrongly introduced in the case (e.g., the package is titled in the introduced position instead of completely introduced).

In some embodiments, the method further comprises, upon estimating that the battery comprises an anomaly, triggering an alarm.

In some embodiments, the method comprises identifying at least one of plates and separators by using a neural network, by using an algorithm of artificial intelligence to detect plates and/or separators in the at least one image, wherein the algorithm of artificial intelligence has been trained by using at least three hundred images of three hundred different batteries.

A second aspect of the invention relates to a system for inspection of batteries, the system comprising:

a 2D computer vision apparatus configured to capture at least one image of a top portion of blocks of layers of a battery;
a 3D computer vision apparatus configured to capture a 3D geometry of a top portion of blocks of layers of a battery;
at least one computing apparatus configured to:

identify layers of a block of layers of a battery by processing the at least one image by applying at least one artificial intelligence algorithm to the at least one image;
estimate, based on the 3D geometry captured by the 3D computer vision apparatus, heights of layers of the block of layers; and

estimate, based on the identification resulting from the step of identifying layers and on the estimated heights of layers, whether a battery comprises an anomaly.

In some embodiments, the 2D computer vision apparatus comprises a linear camera, a telecentric lens and a diffuse illuminator; the system preferably comprising a conveyor belt configured to receive a battery to be inspected and to enable displacement of the battery under a coverage area of the 2D computer vision apparatus and the 3D computer vision apparatus.

Instructions for performing the method may be stored in a memory (e.g., a non-transitory memory).

The linear camera allows taking linear images, of relatively high resolution compared to other non-linear cameras, of the battery as the battery moves in front of the linear camera (e.g., the battery being moved by the conveyor belt), so that an image of relatively high resolution of the complete battery may be assembled from the linear images while enabling a smooth movement of the battery in the conveyor belt. For example, the linear camera allows minimizing a need for stopping the conveyor belt, and hence enables a quick inspection of the batteries and a smooth movement of the conveyor belt.

The telecentric lens is advantageous because it allows minimizing distortion of the at least one captured image.

The illuminator enables that layers of a type made of a reflective material (e.g., the plates) shine more than layers of another a type (e.g., separators) made a less reflective material, so that different types of layers are more easily differentiable in the at least one captured image.

In some embodiments, the 3D computer vision apparatus comprises a linear triangulator.

The linear triangulator comprises an emitter of light and light receivers. The emitter of light is configured to emit light to a top portion of the battery, and the light receivers are configured to receive light reflected by the top portion of the battery. Since an angle between the light emitted by the light emitter and the light sensors of the light receivers is known, the 3D computer vision apparatus may measure heights of the layers and connectors (e.g., lead connectors) of the battery based on the light received by the light receivers. Since the walls delimiting the block of layers may occlude visibility of the block of layers from a light receiver, two light receivers are advantageous for minimizing said occlusion because one of the light receivers may be in position which is not affected by occlusion of a wall occluding visibility of the block of layers from the other one of the light receivers.

A third aspect of the invention relates to a computer program product comprising instructions which, when the program is executed by at least one computing apparatus, cause the at least one computing apparatus to carry out the steps of the method of the first aspect of the invention.

The system and method described herein use artificial intelligence and computer vision techniques to detect manufacturing defects in batteries, such as lead-acid batteries, for vehicles. The system and method can be integrated in the production line or operated manually.

The system and method can detect defects in the internal elements of the batteries, including anomalies in groups, plates, separators or connectors and terminal posts. Batteries are inspected from the top, before the case cover is mounted on the case.

Non-limiting examples of defects that can be inspected and detected are: damaged plates, wrongly enveloped separators, pierced separators, doubled plates, inverted groups, missing separators, excess of material (e.g., lead), lack of material (e.g., lead), wrong plate alignment and inverted plates, among others.

Additional advantages and features of the invention will become apparent from the detailed description that follows and will be particularly pointed out in the appended claims.

## BRIEF DESCRIPTION OF THE DRAWINGS

To complete the description and to provide for a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:

Figure 1 schematically shows an example of a battery to be inspected by a system and method according to an embodiment of the invention.

Figure 2 schematically shows examples of elements of a battery to be inspected according to an embodiment of the invention.

Figures 3 and 25 schematically shows a system for inspection of batteries according to an embodiment of the invention.

Figure 4 schematically shows examples of elements of a 3D computer vision apparatus.

Figure 5 schematically shows a flow diagram of a method for inspection of batteries according to an embodiment of the invention.

Figures 6, 7 and 13 schematically show images of blocks of layers of a battery according to an embodiment of the invention.

Figures 8, 10, 11, 12, 14, 16, 17, 23 and 24 show flow diagrams of steps of a method according to an embodiment of the invention.

Figures 9 and 15 show images of portions of a block of layers according to an embodiment of the invention.

Figure 18 schematically shows a segmentation of an image of a portion of a block of layers according to an embodiment of the invention.

Figures 19 and 20 schematically show a 3D geometry according to an embodiment of the invention.

Figures 21 and 22 show battery defects detectable with a method according to an embodiment of the invention.

## DESCRIPTION OF A WAY OF CARRYING OUT THE INVENTION

The following description is not to be taken in a limiting sense but is given solely for the purpose of describing the broad principles of the invention. Embodiments of the invention will be described by way of example, with reference to the above-mentioned drawings.

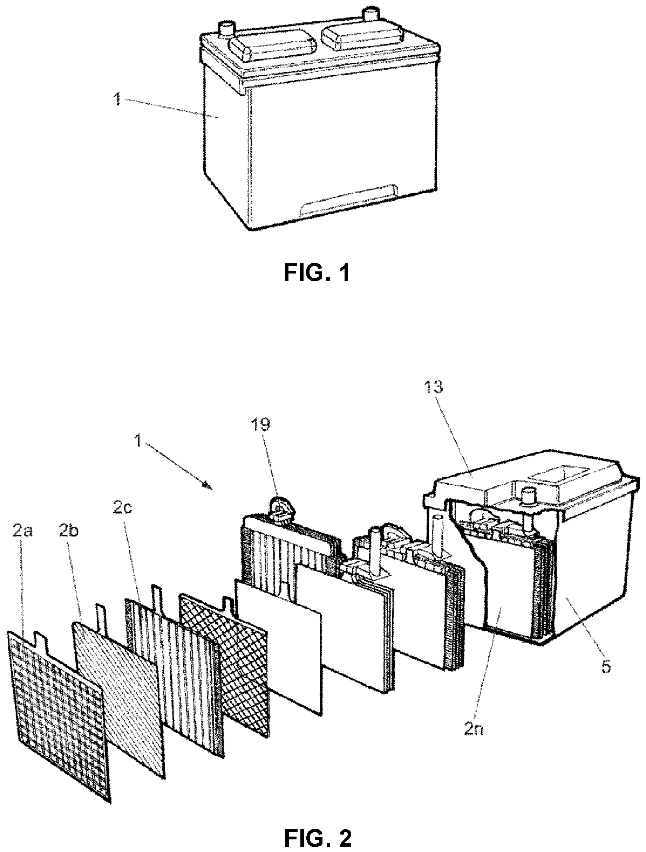

Figure 1 shows a lead-acid battery 1. As shown in figure 2, the battery 1 comprises a case 5 and a cover 13 of the case 5. The battery 1 comprises blocks of layers (e.g., cells) within the case 5. Each block of layers comprises plates 2b and separators 2c, each separator 2c being a cover (e.g., a sleeve) of a plate 2b; the cover separates the plate 2b from adjacent plates 2b. The plates 2b and the separators 2c may be arranged in an alternate manner in each block of layers (i.e., arranged in a spatial order of: first plate 2b, first separator 2c covering a second plate 2b, third plate 2b, second separator 2c covering a fourth plate 2b, ...). Each pair of consecutive plates 2b are made of materials which allow producing electrical energy by a chemical reaction, for example, one plate 2b of the pair is made of lead and the other plate 2b of the pair is made of lead oxide (i.e., $PbO_2$). The separators 2c enable that appropriate ions of an electrolyte (e.g., an aqueous solution of sulfuric acid) move between two consecutive plates 2b, so that the chemical reaction may be performed. For example, the separator may permit the movement of $HSO_4^-(aq)$ and $H^+$, so that the following chemical reaction is performed: $Pb(s) + HSO_4^-(aq) \rightarrow PbSO_4(s) + H^+(aq) + 2e^-$

Each plate 2b is electrically connected to an electrode, for example, to a grid layer 2a made of an electrically conductive material.

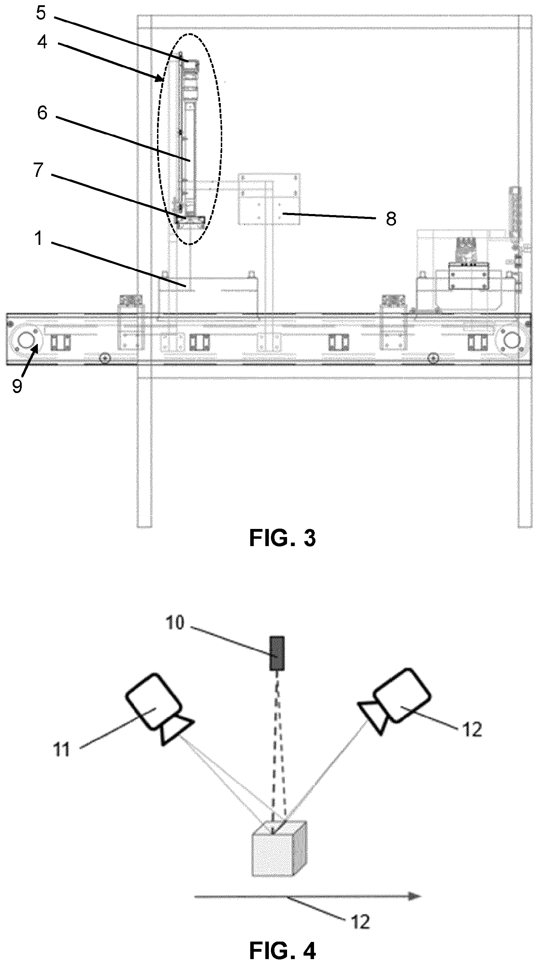

As shown in figure 3, a system for inspection of batteries comprises a 2D computer vision apparatus 4, a 3D computer vision apparatus 8 and a conveyor belt 9.

The 2D computer vision apparatus 4 may comprise a camera 5, a lens 6, an illuminator 7 and a computing apparatus (not shown in the figures). The camera is, for example, a linear camera having an appropriate line rate with respect to the speed of movement of the batteries 1 in the conveyor belt 9. The lens 6 is, for example, a telecentric lens for high resolution cameras, having a field of view of 180 mm, a depth field higher than 60 mm and a working distance higher than 200 mm. The illuminator is, for example, a linear diffuse dome emitting white light and covering more than a width of the inspected battery 1.

The 3D computer vision apparatus 8 may comprise (see figure 4) a light emitter 10 (e.g., a laser emitter), two light receivers (e.g., cameras) 11, 12 and a computing apparatus (not shown in the figures). The light emitter 10, the light receivers 11, 12 and the computing apparatus may be configured to triangulate points of a battery reflecting the light emitted by the light emitter 10 and subsequently received by the light receivers 11, 12. Thereby, 3D positions of points of the battery may be estimated by the 3D computer vision apparatus. The light emitter 10 may emit red laser light, a resolution of the 3D computer vision apparatus in a vertical direction (i.e., from top to bottom) may be of between 10 and 89 micrometers, and the field of view of the 3D computer vision apparatus in a direction perpendicular to the vertical direction may be of between 110 and 310 mm. The computing apparatus of the 3D computer vision apparatus 8 may or may not be the computing apparatus of the 2D computer vision apparatus 4.

The battery 1 inspected by the 2D computer vision apparatus 4 and the 3D computer vision apparatus 8 is uncovered, so that the blocks of layers of the battery 1 are visible from above the battery 1. After performing the method 100, the cover 13 may be attached to the battery 1.

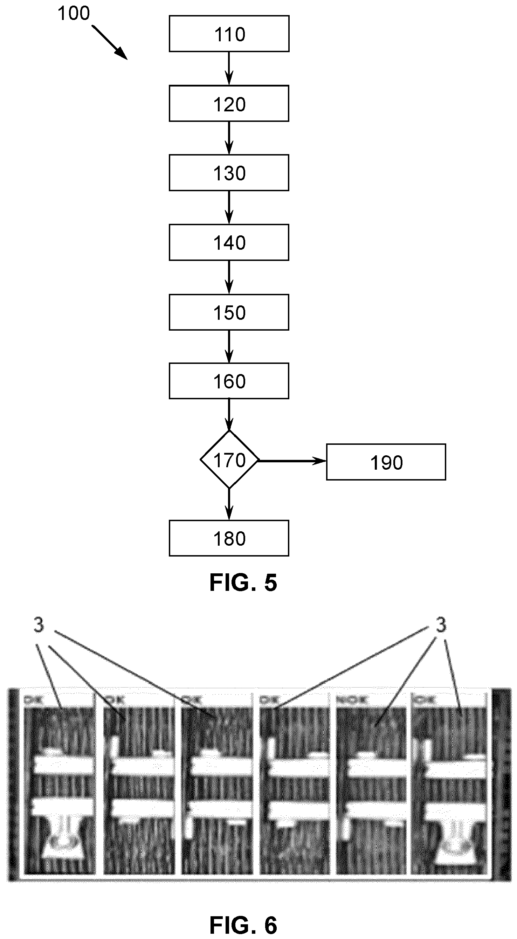

Figure 5 shows a flow diagram of a method 100 for inspection of batteries, the method 100 comprising:

providing 110 the battery 1;

capturing 120, by the 2D computer vision apparatus 4, at least one image of a top portion of the blocks of layers of the battery 1;

capturing 130, by the 3D computer vision apparatus 8, a 3D geometry of the top portion of the blocks of layers;

identifying 140, by the 2D computer vision apparatus 4, layers of a block (3) of layers of the blocks of layers, the step of identifying comprising processing, by the 2D computer vision apparatus (4), the at least one image by applying at least one algorithm of artificial intelligence to the at least one image;

estimating 150, by the 3D computer vision apparatus 8, heights of layers of the block of layers 3, the estimation being based on the 3D geometry captured by the 3D computer vision apparatus 8; and

estimating 160, by the 2D computer vision apparatus 4 and the 3D computer vision apparatus 8, whether the battery 1 comprises an anomaly, the estimation being based on the identification of layers resulting from the step of identifying the layers and on the estimated heights of layers.

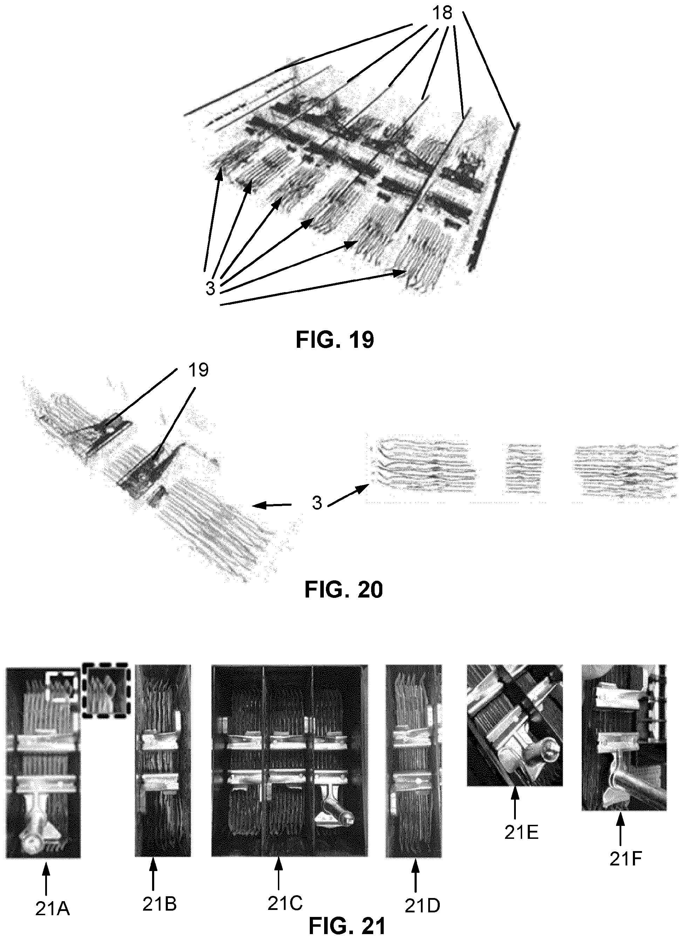

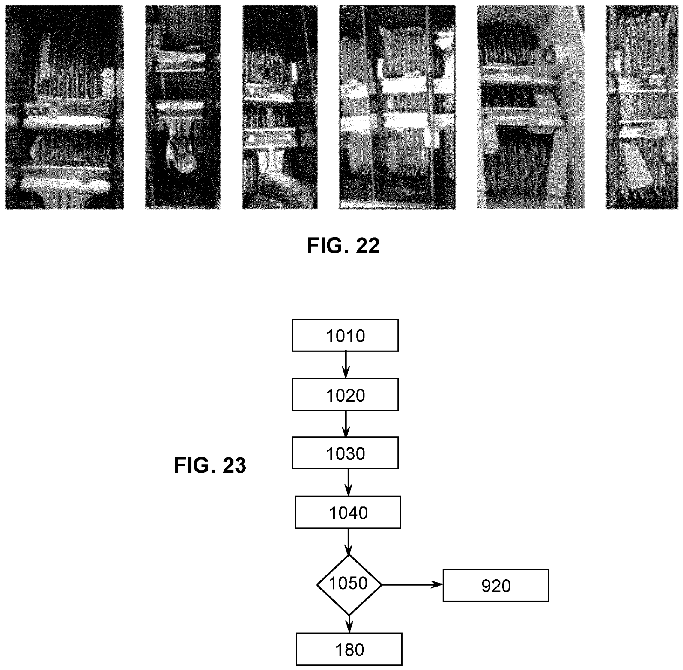

The method 100, as can deduced from the following detailed explanation of possible steps included in the method 100, may be used to estimate whether the battery 1 comprises any of the anomalies shown in figure 21 (i.e., pierced separator 21A, double plate 21B, inverted group 21C, missing separator 21D, excess of lead 21E and lack of lead 21F) and figure 22, figure 22 showing wrongly enveloped separators.

Figure 6 shows an example of an image, captured by the 2D computer vision apparatus 4, in which six blocks of layers 3 of a battery 1 have been delimited by imaginary rectangles and marked as OK (if the block does not comprise any anomaly) or NOK (if the block comprises an anomaly) based on the estimations, performed by the 2D computer vision apparatus 4, of whether each block 3 of the blocks layers comprises an anomaly. The at least one image may be taken while the illuminator 7 provides light, so that layers of the battery 1 having a high coefficient of reflection of light may look different in the at least one image than layers of the battery 1 having a relatively low coefficient of reflection of light.

The 2D analysis (i.e., the analysis of the at least one image captured by the 2D computer vision apparatus 4) is divided into two algorithms: an algorithm for detecting anomalies of the separators (e.g., wrong number of separators, open separators, punctures or shorts), and an algorithm for detecting anomalies of the plates (e.g., a lack of a plate, or two consecutive plates without a separator separating the two consecutive plates).

In a first step common to the two algorithms, segmentation of the at least one image captured by the 2D computer vision apparatus is performed. In this segmentation, for example, locations of connectors 19 (e.g., lead connectors) of the battery 1 are estimated for being used as a spatial reference. If not all expected connectors of the battery 1 are located, then the method may comprise generating, by a computing apparatus, a signal indicative of an anomaly, and the inspection method may end. If all the connectors are located, then the estimated locations are used as a spatial reference for locating battery elements within the at least one image to be inspected.

Regions of separators 2c and plates 2b may be identified in the at least one captured image by using a trained neural network. The neural network may be a network of detection of objects which extracts features at a multiscale level aiming to be robust in the detection of different references of images. The neural network may be trained with 300 images of 300 batteries which do not present any anomaly and have different, but acceptable, features (e.g., comprising plastics of different sizes, comprising acceptable burrs, comprising separators having acceptable deformations or comprising cardboard of different sizes). By training the neural network with images of batteries without any anomaly, the algorithm may understand features that deviate from normal as defective. Once trained, the neural network may be validated with about 60 batteries. After that, the neural network may be validated in a production environment where most of the batteries do not have any anomaly to check that the number of false positives (i.e., batteries without any anomaly but detected by the 2D analysis as defective) is low.

Examples of steps of the algorithm for detecting anomalies of the separators 2c are explained below.

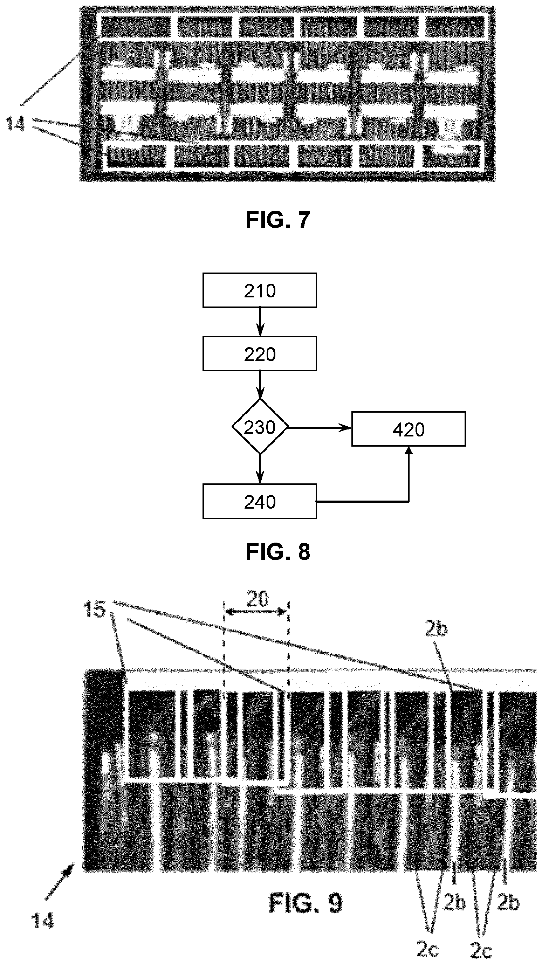

The 2D computer vision apparatus 4 analyses the regions to be inspected (e.g., each one of the regions within each imaginary rectangle 14 of figure 7). The following steps of the method are performed for each block of layers 3, for example, for each region delimited by an imaginary rectangle 14. As shown in figure 8, separators 2c within each imaginary rectangle 14 may be identified 210 (e.g., by executing the algorithm of artificial intelligence to obtain first imaginary boundaries), by the 2D computer vision apparatus 4, so that data indicative of a potential region of each identified separator 2c of the block of layers 3, and data indicative of a confidence value associated with each identified separator 2c are obtained. Then, it may be performed a step of estimating 220, by the 2D computer vision apparatus 4 and based on the data indicative of a potential region of each identified separator 2c, a total number of the identified separators 2c at least partially contained within each one of first imaginary boundaries (i.e. in the potential region), the first imaginary boundaries (e.g., imaginary rectangle 15 of figure 9) being defined within the at least one image captured by the 2D computer vision apparatus 4. Then, it may be determined 230, by the 2D computer vision apparatus 4, whether the total number of the identified separators 2c at least partially contained within a boundary of the first imaginary boundaries is more than one. For example, the total number of the identified separators 2c within each boundary of the first imaginary boundaries may be estimated, by the 2D computer vision apparatus 4, based on a width 20 of a region delimited by each boundary of the imaginary boundaries, the width 20 having a direction perpendicular to the plates 2b and separators 2c. A distribution of the widths may be compared to a predetermined distribution (e.g., to a normal distribution; the mean of the normal distribution being, for example, equal to the mean of the distribution of the widths, and the variation of the normal distribution being, for example, equal to the variation of the distribution of the widths). If it is determined, by the 2D computer vision apparatus 4, that the distribution of widths does not comprise any outlier with respect to the predetermined distribution, it may be estimated that the first imaginary boundaries delimit regions partially or wholly containing merely one separator 2c; then the method 100 may continue in step 420. If it is determined, by the 2D computer vision apparatus 4, that the distribution of widths comprises an outlier with respect to the predetermined distribution, it may be estimated that the imaginary boundary having the outlier width delimits a region partially or completely containing more than one separator 2c; then the imaginary boundary may be divided 240 into two imaginary boundaries having lower width. The step of dividing 240 the boundary is performed for each boundary having an outlier width until the distribution of widths does not comprise any outlier, then the method 100 may continue in step 420.

Figure 9 shows white regions having a high coefficient of reflection of light which correspond to the plates 2b. Between the white regions, there are darker regions (i.e., having a relatively low coefficient of reflection of light) which correspond to the separators 2c.

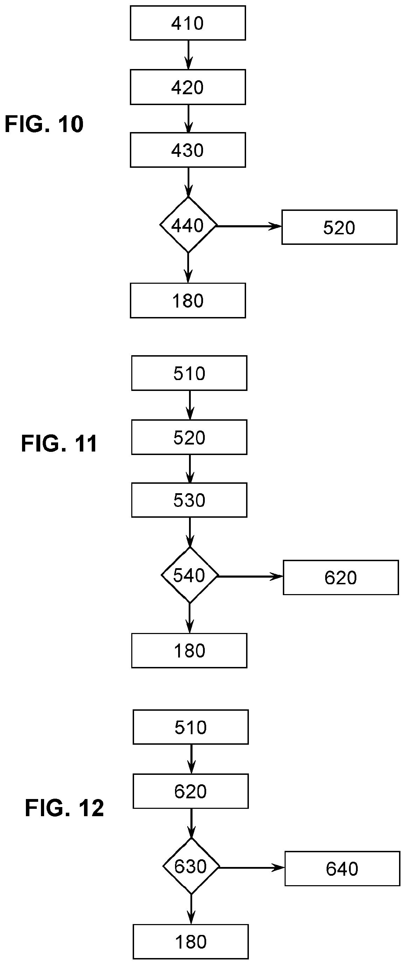

Following in figure 10, it may be performed a step of estimating 420, by the 2D computer vision apparatus 4, a total number of separators 2c of the block of layers 3, the estimation being based on the identified separators 2c. Next, it may be performed a step of comparing 430, by the 2D computer vision apparatus 4, a predetermined number (i.e., a total number of expected separators 2c) with the estimated total number of separators 2c of the block of layers 3. Then, it may be determined 440, by the 2D computer vision apparatus 4, whether the predetermined number is different than the estimated total number of separators 2c of the block of layers 3. If the predetermined number is different than the estimated total number of separators 2c, a signal indicative of an anomaly of the block of layers 3 is generated 180, and the method 100 may continue in step 520 or another region of the at least one image may be inspected or the method 100 may end. If the predetermined number is equal to the estimated total number of separators 2c, the method 100 may continue in step 520.

Following with figure 11, it may be performed a step of determining 520, by the 2D computer vision apparatus 4, a value of confidence threshold, the determination being based, for example, on a standard deviation of the confidence value associated with each identified separator 2c. Then, it may be performed a step of comparing 530, by the 2D computer vision apparatus 4, the value of confidence threshold with each confidence value of the confidence values associated with the identified separators 2c. Then, it may be determined 540, by the 2D computer vision apparatus 4, whether the confidence value associated with an identified separator 2c is lower than the value of confidence threshold. If a confidence value associated with an identified separator 2c is lower than the value of confidence threshold, a signal indicative of an anomaly of the block of layers 3 is generated 180, and the method 100 may continue in step 620 or another region (e.g., a region of another block of layers 3 or another region of the same block of layers 3) of the at least one image may be inspected or the method 100 may end. If the confidence values associated with the identified separators 2c of the block of layers 3 are higher or equal than the value of confidence threshold, the method may continue in step 620.

Following in figure 12, it may be performed a step of comparing 620, by the 2D computer vision apparatus 4, a distribution of the confidence values of the identified separators 2c with a normal distribution adjusted to the distribution of the confidence values. Then, it may be determined 630, by the 2D computer vision apparatus 4, whether the distribution of the confidence values comprises outliers with respect to the normal distribution. If the distribution of confidence values comprises any outlier with respect to the normal distribution, a signal indicative of an anomaly may be generated 180, and the method 100 may end or another region (e.g., a region of another block of layers 3 or another region of the same block of layers 3) of the at least one image may be inspected. If the distribution of confidence values does not comprise any outlier with respect to the normal distribution, the algorithm for detecting anomalies of the separators 2c may end 640 or another region of the at least one image may be inspected.

As can be deduced from figure 7, in some embodiments, the 2D analysis (e.g., the steps of figures 10, 11 and 12) may be performed in two portions of each block of layers, for example, two end portions of each block of layers, the two end portions comprising the plates 2b and separators 2c of the block of layers. Thereby, the method allows identifying anomalies in a large top surface of the block of layers compared with performing the method in merely one of the portions of each block of layers.

Examples of steps of the algorithm for detecting anomalies of the plates 2b are explained below.

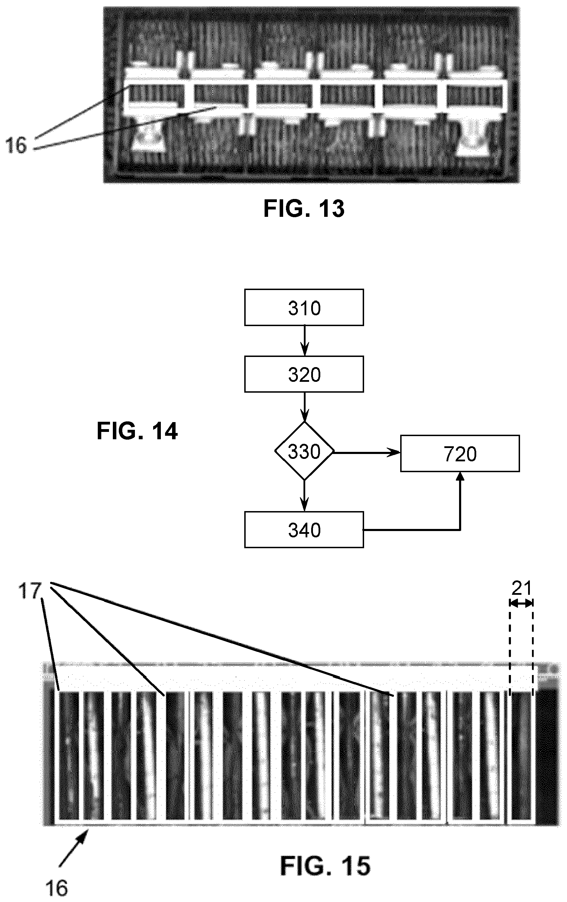

The 2D computer vision apparatus 4 analyses the regions to be inspected (e.g., each one of the regions within each imaginary rectangle 16 of figure 13). The following steps of the method are performed for each block of layers 3, for example, for each region delimited by an imaginary rectangle 16. As shown in figure 14, plates 2b within each imaginary rectangle 15 may be identified 310 (e.g., by executing the algorithm of artificial intelligence to obtain second imaginary boundaries), by the 2D computer vision apparatus 4, so that data indicative of a potential region of each identified plate 2b of the block of layers 3 may be obtained, and data indicative of a confidence value associated with each identified plate 2b may be obtained. Then, it may be performed a step of estimating 320, by the 2D computer vision apparatus 4 and based on the data indicative of a potential region of each identified plate 2b, a total number of the identified plates 2b at least partially contained in each one of second imaginary boundaries (i.e., in the potential region), the second imaginary boundaries (e.g., imaginary rectangle 17 of figure 15) being defined within the at least one image captured by the 2D computer vision apparatus 4. Then, it may be determined 330, by the 2D computer vision apparatus 4, whether the total number of the identified plates 2b at least partially contained in a boundary of the second imaginary boundaries is more than one. For example, the total number of the identified plates 2b within each boundary of the second imaginary boundaries may be estimated, by the 2D computer vision apparatus 4, based on a width 21 of a region delimited by the imaginary boundary, the width 21 having a direction perpendicular to the plates 2b and separators 2c. A distribution of the widths may be compared to a predetermined distribution (e.g., to a normal distribution; the mean of the normal distribution being, for example, equal to the mean of the distribution of the widths, and the variation of the normal distribution being, for example, equal to the variation of the distribution of the widths). If it is determined, by the 2D computer vision apparatus 4, that the distribution of widths does not comprise any outlier with respect to the predetermined distribution, it may be estimated that the second imaginary boundary delimits a region partially or wholly containing merely one plate 2b; then the method 100 may continue in step 720. If it is determined, by the 2D computer vision apparatus 4, that the distribution of widths comprises an outlier with respect to the predetermined distribution, it may be estimated that the imaginary boundary having the outlier width delimits a region partially or completely containing more than one plate 2b; then the imaginary boundary may be divided 340 into two imaginary boundaries having lower width. The step of dividing 340 the boundary is performed for each boundary having an outlier width until the distribution of widths does not comprise any outlier, then the method 100 may continue in step 720.

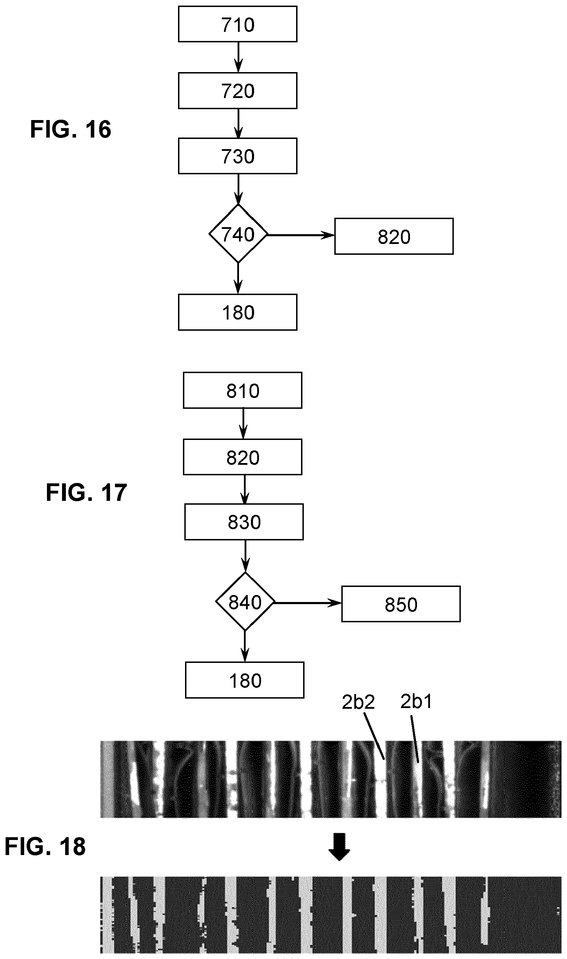

Following in figure 16, it may be performed a step of estimating 720, by the 2D computer vision apparatus 4, a distance between each pair of consecutive plates 2b (e.g., plates 2b1 and 2b2 of figure 18) of the identified plates 2b, the estimation being based on the data indicative of a region of each identified plate 2b of the block of layers 3. The distance between each pair of consecutive plates 2b may be a distance between centroids of segmented plates 2b (see figure 18 showing an example of the segmentation of the plates). Then, it may be performed a step of comparing 730, by the 2D computer vision apparatus 4, each of the estimated distances with a predetermined threshold value. Then, it may be determined, by the 2D computer vision apparatus 4, whether an estimated distance of the estimated distances is lower than the predetermined threshold value. A distance being lower than the predetermined threshold value is indicative of two consecutive plates 2b without a separator 2c separating the two consecutive plates 2b. If an estimated distance of the estimated distances is lower than the predetermined threshold value, a signal indicative of an anomaly may be generated 180 and the method 100 may continue in step 820 or another region of the at least one image may be inspected or the method 100 may end. If all the estimated distances are higher than the predetermined threshold value, the method 100 may continue in step 820.

Following in figure 17, it may be estimated 820, by the 2D computer vision apparatus 4, a distance (for example, by using the centroids as explained above) between each pair of consecutive plates 2b of the identified plates 2b, the estimation being based on the data indicative of a region of each identified plate 2b of the block of layers 3. Then, the 2D computer vision apparatus 4 may process 840 the estimated distances and the total number of identified separators 2c of the block of layers 3 to estimate whether the block of layers 3 lacks a plate 2b. If it is estimated that the block of layers 3 lacks a plate 2b, a signal indicative of an anomaly may be generated 180 and the method 100 may end or another region of the at least one image may be inspected. If it is estimated that the block of layers 3 does not lack any plate 2b, the method 100 may end 850 or another region of the at least one image may be inspected.

In examples, the analysis of the 3D geometry is based on geometric calculations and statistics. In examples, estimation of an anomaly of a plate 2b, of an anomaly of a separator 2c or a lack or excess of material (e.g., lead) in the top connectors of the battery 1 may be based on the 3D geometry captured by the 3D computer vision apparatus 8. Different examples of the 3D geometry captured by the 3D computer vision apparatus are shown in figures 19 and 20.

It may be estimated, by the 3D computer vision apparatus, whether the battery 1 comprises an anomaly based on the following steps.

In a first step, it may be performed an alignment of the battery 1 with a spatial reference of the 3D computer vision apparatus 8. For achieving the alignment, distances between the light receivers 11, 12 of the 3D computer vision apparatus 8 and the battery 1 under inspection is adjusted based on a predetermined parameter. If an error occurs in the alignment step, it may be due to an incorrect predetermined parameter or because the geometry of the complete battery 1 has not been captured (e.g., the end or the beginning of the battery 1 has not been captured). A check of the alignment may be performed by identifying a total number of blocks of layers 3 (e.g., cells) in the 3D geometry based on the 3D geometry captured by the 3D computer apparatus 8. If the total number of identified blocks of layers 3 is different than a predetermined number (e.g., six in the example shown in figure 19), the 3D computer vision apparatus 8 may determine that the alignment is not successfully performed. If the total number of identified blocks of layers 3 is equal to the predetermined number, a margin may be applied near the walls 18 of the battery so that noise appearing near the walls 18 is avoided in the analysis of each block of layers 3. If the method 100 estimates a relatively high number of false positives of anomalies near the walls 18, it may be appropriate to increase the margin applied near the walls 18 to minimize the false positives. If the margin is too high, anomalies near the walls 18 may be missed by the method 100.

After successfully completing the alignment step, separators 2c, plates 2b, walls 18 and connectors 19 may be located by the 3D computer vision apparatus 8. Examples of this location and of segmentation of the layers is shown in figure 20. Location of the separators 2c, plates 2b, walls 18 and connectors 19 is based on a statistical method based on a nominal distance between the separators and a top limit of the uncovered battery 1 (e.g., a top limit of a wall 18). The nominal distance depends on the type of battery 1. If the nominal distance is too high, the 3D computer vision apparatus 8 may interpret that the block of layers 3 is empty. If the nominal distance is too low, the method 100 may miss detection of separators 2c which are raised with respect to an acceptable position of the separators 2c.

Following in figure 23, after locating the separators 2c, the plates 2b, the walls 18 and the connectors 19, the 3D computer vision apparatus 8 may estimate 1010 heights of layers of the blocks of layers of the battery 1, the estimation being based on the 3D geometry captured by the 3D computer vision apparatus 8 (e.g., computes, for each block of layers 3, a histogram of estimated heights of the separators 2c and the plates 2b). For each block of layers 3 of the blocks of layers, the 3D computer vision apparatus computes 1020 a mode of the estimated heights of the layers of the block of layers 3. The histograms allow detecting, for each block of layers 3, a mode of the estimated heights and a dispersion of the estimated heights of layers of the block of layers 3. Based on the peak of the histogram of each block of layers 3, an average mode (i.e., an average of the peaks of the histograms of the blocks of layers 3) may be computed 1030 by the 3D computer vision apparatus. Then, the 3D computer vision apparatus 8 may compute 1040 a difference between the mode of each block of layers and the computed average of the computed modes. Then, the 3D computer vision apparatus 8 may determine 1050 whether an absolute value of a difference of the computed differences is higher than a predetermined threshold. If an absolute value is higher than a predetermined threshold, a signal indicative of an anomaly may be generated 180 and the method 100 may end or the method 100 may continue in step 920. If not any absolute value is higher than the predetermined threshold, the method 100 may continue in step 920.

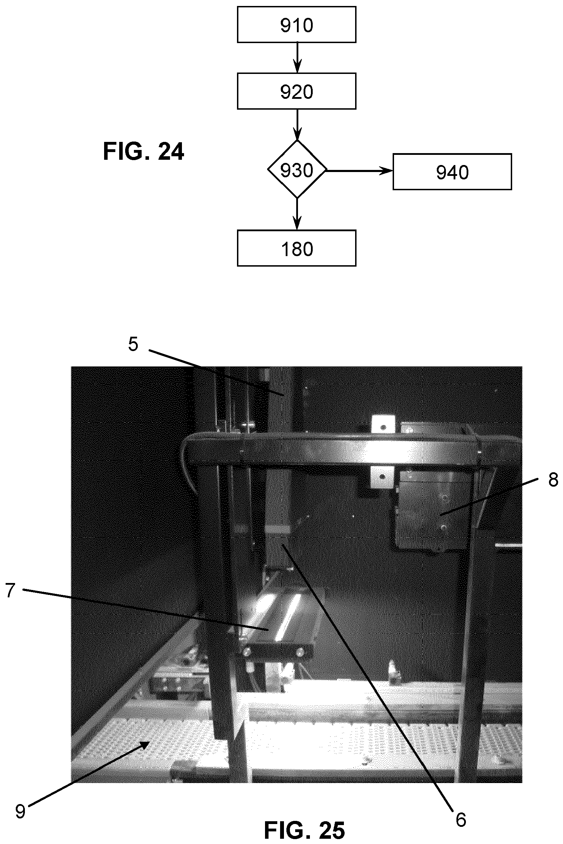

Following in figure 24, the 3D computer vision apparatus 8 may compute 920, for each block of layers of the blocks of layers, a difference between the mode of the block of layers and each estimated height of layer of the block of layers. The 3D computer vision apparatus 8 may determine 930 whether an absolute value of a difference of the computed differences is higher than a predetermined threshold. If an absolute value is higher than the predetermined threshold, a signal indicative of an anomaly may be generated 180 and the method 100 may end or another block of layers may be analyzed or a connector may be analyzed. If not any absolute value is higher than the predetermined threshold, the method 100 may end or another block of layers may be analyzed 940 or a connector may be analyzed.

Next, the 3D computer vision apparatus 8 may estimate an area of a concave envelope of a connector 19 and an area of a burr of the connector 19, the estimation being based on the captured 3D geometry. The 3D computer vision apparatus 8 may compute a difference between a nominal area of connector and the estimated area of each concave envelope. If a computed difference of the computed differences is higher than a predetermined threshold, a signal indicative of an anomaly 180 may be generated. If not any computed difference is higher than the predetermined threshold, the method 100 may continue or end.

The 3D computer vision apparatus 8 may compute a difference between a nominal area of burr and the estimated area of each burr, the estimated area of the burr being based on the captured 3D geometry. If a computed difference of the computed differences is higher than a predetermined threshold, a signal indicative of an anomaly may be generated 180. If not any computed difference is higher than the predetermined threshold, the method 100 may continue or end.

Thereby, the 2D analysis and the 3D analysis complement each other. If one of the analyses detects an anomaly a signal indicative of an anomaly of the battery may be generated 180, and a signal indicative of a location (e.g., a particular block of layers, a particular separator 2c, a particular plate 2b, a particular connector 19, etc.) of the anomaly may be generated.

The computing apparatus may be, for example, a CPU, a GPU, an FPGA, an ASIC, a personal computer, a laptop, etc.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method (100) for inspection of batteries, comprising:

   providing (110) a battery (1) comprising a case (5) and blocks of layers (2a, 2b, 2c ..., 2n), the blocks of layers being within the case (5);
   capturing (120), by a 2D computer vision apparatus (4), at least one image of a top portion of the blocks (3) of layers;

capturing (130), by a 3D computer vision apparatus (8), a 3D geometry of the top portion of the blocks of layers;
identifying (140), by the 2D computer vision apparatus (4), layers of a block (3) of layers of the blocks of layers, the step of identifying comprising processing, by the 2D computer vision apparatus (4), the at least one image by applying at least one algorithm of artificial intelligence to the at least one image;
estimating (150), by the 3D computer vision apparatus (8), heights of layers of the block (3) of layers, the estimation being based on the 3D geometry captured by the 3D computer vision apparatus (8); and
estimating (160), by the 2D computer vision apparatus (4) and the 3D computer vision apparatus (8), whether the battery (1) comprises an anomaly, the estimation being based on the identification of layers resulting from the step of identifying the layers and on the estimated heights of layers.

2. The method of claim 1, wherein at least one of A) and B):

A) each block of layers of the blocks of layers comprises separators (2c), and the step of identifying layers of a block of layers comprises identifying (210) separators thus obtaining data indicative of a region of each identified separator (2c) of the block of layers; the step of identifying (210) separators comprises:

processing, by the 2D computer vision apparatus (4), the at least one image by applying an artificial intelligence algorithm to the at least one image to determine first boundaries delimiting regions of the at least one image, the first boundaries at least partially comprising one or more separators;
for each boundary of the first boundaries, estimating (220), by the 2D computer vision apparatus (4), a total number of the identified separators (2c) at least partially contained in the boundary of the first imaginary boundaries;
for each boundary of the first imaginary boundaries, comparing, by the 2D computer vision apparatus, the estimated total number of the identified separators (2c) with a predetermined value equal to one; and
for each boundary of the first imaginary boundaries in which the 2D computer vision apparatus (4) determines that the estimated total number of the identified separators (2c) at least partially contained in the boundary is more than one, dividing the boundary into two boundaries, thus obtaining data indicative of a region of each identified separator (2c) of the block of layers.

B) each block of layers of the blocks of layers comprises plates (2b), and the step of identifying layers of a block of layers comprises identifying (310) plates (2b) thus obtaining data indicative of a region of each identified plate (2b) of the block of layers; the step of identifying plates comprises:

processing, by the 2D computer vision apparatus (4), the at least one image by applying an artificial intelligence algorithm to the at least one image to determine second boundaries delimiting regions of the at least one image, the second boundaries at least partially comprising one or more plates;
for each boundary of the second boundaries, estimating (320), by the 2D computer vision apparatus (4), a total number of the identified plates (2b) at least partially contained in the boundary of the second imaginary boundaries;
for each boundary of the second imaginary boundaries, comparing, by the 2D computer vision apparatus, the estimated total number of the identified plates (2b) with a predetermined value equal to one; and
for each boundary of the second imaginary boundaries in which the 2D computer vision apparatus (4) determines that the estimated total number of the identified plates (2b) at least partially contained in the boundary is more than one, dividing the boundary into two boundaries, thus obtaining data indicative of a region of each identified plate (2b) of the block of layers.

3. The method of claim 1 or 2, each block of layers of the blocks of layers comprising separators (2c), and the step of identifying layers of a block of layers comprises identifying (410) separators (2c); the step of estimating whether the battery comprises an anomaly comprising:

- estimating (420), by the 2D computer vision apparatus (4), a total number of separators (2c) of the block of layers, the estimation being based on the identified separators (2c);
- comparing (430), by the 2D computer vision apparatus (4), a predetermined number with the estimated total number of separators (2c) of the block of layers; and
- upon determining, by the 2D computer vision apparatus (4), that the predetermined number is different than the estimated total number of separators (2c) of the block of layers, generating (180) a signal indicative of an anomaly.

4. The method of any one of the preceding claims, each block of layers of the blocks of layers comprising separators (2c), and the step of identifying layers of a block of layers comprises identifying (510) separators (2c) thus obtaining data indicative of a confidence value associated with each identified separator (2c); the step of estimating whether the battery comprises an anomaly comprising:

- determining (520), by the 2D computer vision apparatus (4), a value of confidence threshold, the determination being optionally based on a standard deviation of the confidence value of each identified separator (2c);
- comparing (530), by the 2D computer vision apparatus (4), the value of confidence threshold with each confidence value of the confidence values associated with the identified separators (2c); and
- upon determining, by the 2D computer vision apparatus (4), that the confidence value associated with an identified separator (2c) is lower than the value of confidence threshold, generating (180) a signal indicative of an anomaly.

5. The method of any one of the preceding claims, each block of layers of the blocks of layers comprising separators (2c), and the step of identifying layers of a block of layers comprises identifying (510) separators (2c) thus obtaining data indicative of a confidence value associated with each identified separator (2c) of the block of layers; the step of estimating whether the battery comprises an anomaly comprising:

- comparing (620), by the 2D computer vision apparatus (4), a distribution of the confidence values associated with the identified separators (2c) with a normal distribution;
- upon estimating, by the 2D computer vision apparatus (4), that the distribution of the confidence values comprises outliers with respect to the normal distribution, generating (180) a signal indicative of an anomaly.

6. The method of any one of the preceding claims, each block of layers of the blocks of layers comprising plates (2b), and the step of identifying layers of a block of layers comprises identifying (710) plates (2b) thus obtaining data indicative of a region of each identified plate (2b) of the block of layers; the step of estimating whether the battery comprises an anomaly comprising:

- estimating (720), by the 2D computer vision apparatus (4), a distance between each pair of consecutive plates (2b) of the identified plates (2b), the estimation being based on the data indicative of a region of each identified plate (2b) of the block of layers;
- comparing (730), by the 2D computer vision apparatus (4), each of the estimated distances with a predetermined threshold value; and
- upon determining, by the 2D computer vision apparatus (4), that an estimated distance of the estimated distances is lower than the predetermined threshold value, generating (180) a signal indicative of an anomaly.

7. The method of any one of the preceding claims, each block of layers of the blocks of layers comprising plates (2b), and the step of identifying layers of a block of layers comprises identifying separators (2c) and identifying plates thus obtaining data indicative of a region of each identified plate (2b) of the block of layers; the step of estimating whether the battery comprises an anomaly comprising:

- estimating (820), by the 2D computer vision apparatus (4), a distance between each pair of consecutive plates (2b) of the identified plates (2b), the estimation being based on the data indicative of a region of each identified plate (2b) of the block of layers;
- estimating (830), by the 2D computer vision apparatus (4), a total number of separators (2c) of the block of layers, the estimation being based on the identified separators (2c);
- processing (840), by the 2D computer vision apparatus (4), the estimated distances and the total number of identified separators (2c) to estimate whether the block of layers lacks a plate (2b).

8. The method of any one of the preceding claims, the step of estimating whether the battery comprises an anomaly comprising:

- computing (910), by the 3D computer vision apparatus (8), a mode of the estimated heights of layers of the block of layers;
- for each layer of the block of layers, computing (920), by the 3D computer vision apparatus (8), a difference between the mode and the estimated height of the layer;
- for each layer of the block of layers, comparing, by the 3D computer vision apparatus, an absolute value of the computed difference with a predetermined threshold; and

- upon determining, by the 3D computer vision apparatus (8), that an absolute value of the computed differences is higher than a predetermined threshold, generating (180) a signal indicative of an anomaly.

9. The method of any one of the preceding claims, the step of estimating whether the battery comprises an anomaly comprising:

- estimating (1010), by the 3D computer vision apparatus (8), heights of layers of the blocks of layers of the battery, the estimation being based on the 3D geometry captured by the 3D computer vision apparatus (8);
- for each block of layers of the blocks of layers, computing (1020), by the 3D computer vision apparatus (8), a mode of the estimated heights of the layers of the block of layers;
- computing (1030), by the 3D computer vision apparatus (8), an average of the computed modes;
- for each block of layers of the blocks of layers, computing (1040), by the 3D computer vision apparatus (8), a difference between the computed mode of the block of layers and the computed average of the computed modes;
- for each block of layers of the blocks of layers, comparing, by the 3D computer vision apparatus (8), an absolute value of the computed difference with a predetermined threshold;
- upon determining, by the 3D computer vision apparatus (8), that an absolute value of the computed differences is higher than a predetermined threshold, generating a signal (180) indicative of an anomaly.

10. The method of any one of the preceding claims, further comprising, upon estimating that the battery (1) comprises an anomaly, triggering an alarm.

11. The method of any one of the preceding claims, the method comprising identifying at least one of plates (2b) and separators (2c) by using an algorithm of artificial intelligence to detect plates and/or separators in the at least one image, wherein the algorithm of artificial intelligence has been trained by using at least three hundred images of three hundred different batteries.

12. A system for inspection of batteries, comprising:

a 2D computer vision apparatus (4) configured to capture at least one image of a top portion of blocks of layers of a battery;
a 3D computer vision apparatus (8) configured to capture a 3D geometry of a top portion of blocks of layers of a battery (1);
at least one computing apparatus configured to:

identify layers of a block of layers of a battery by processing the at least one image by applying at least one artificial intelligence algorithm to the at least one image;
estimate, based on the 3D geometry captured by the 3D computer vision apparatus (8), heights of layers of the block of layers; and
estimate, based on the identification resulting from the step of identifying layers and on the estimated heights of layers, whether a battery comprises an anomaly.

13. The system of claim 12, wherein the 2D computer vision apparatus (4) comprises a linear camera (5), a telecentric lens (6) and a diffuse illuminator (7); the system preferably comprising a conveyor belt (9) configured to receive a battery (1) to be inspected and to enable displacement of the battery (1) under a coverage area of the 2D computer vision apparatus (4) and the 3D computer vision apparatus (8).

14. The system of claim 12 or 13, wherein the 3D computer vision apparatus (8) comprises a linear triangulator.

15. A computer program product comprising instructions which, when the program is executed by at least one computing apparatus, cause the at least one computing apparatus to carry out the steps of the method of any one of claims 1 to 11.

EP 4 394 695 A1

FIG. 1

FIG. 2

15

**FIG. 3**

**FIG. 4**

EP 4 394 695 A1

FIG. 5

FIG. 6

17

FIG. 7

FIG. 8

FIG. 9

**FIG. 10**

```
┌──────────┐
│   410    │
└──────────┘
      │
      ▼
┌──────────┐
│   420    │
└──────────┘
      │
      ▼
┌──────────┐
│   430    │
└──────────┘
      │
      ▼
     ◇ 440 ◇ ─────────▶ ┌──────────┐
      │                 │   520    │
      ▼                 └──────────┘
┌──────────┐
│   180    │
└──────────┘
```

**FIG. 11**

```
┌──────────┐
│   510    │
└──────────┘
      │
      ▼
┌──────────┐
│   520    │
└──────────┘
      │
      ▼
┌──────────┐
│   530    │
└──────────┘
      │
      ▼
     ◇ 540 ◇ ─────────▶ ┌──────────┐
      │                 │   620    │
      ▼                 └──────────┘
┌──────────┐
│   180    │
└──────────┘
```

**FIG. 12**

```
┌──────────┐
│   510    │
└──────────┘
      │
      ▼
┌──────────┐
│   620    │
└──────────┘
      │
      ▼
     ◇ 630 ◇ ─────────▶ ┌──────────┐
      │                 │   640    │
      ▼                 └──────────┘
┌──────────┐
│   180    │
└──────────┘
```

FIG. 13

FIG. 14

FIG. 15

**FIG. 16**

710 → 720 → 730 → 740

740 → 820

740 → 180

**FIG. 17**

810 → 820 → 830 → 840

840 → 850

840 → 180

**FIG. 18**

2b2  2b1

FIG. 19

FIG. 20

FIG. 21

FIG. 22

FIG. 23

FIG. 24

FIG. 25

Europäisches
Patentamt

European
Patent Office

Office européen
des brevets

# EUROPEAN SEARCH REPORT

Application Number

EP 22 38 3296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/057341 A1 (PROHM CHRISTOPHER [DE] ET AL) 24 February 2022 (2022-02-24) * paragraphs [0019], [0052], [0071]; claim 5; figure 4 * | 1,10-15 | INV. G06T7/00 G06T7/11 G06T7/60 |
| A | CN 114 708 230 A (SHENZHEN JINGMING INSPECTION EQUIPMENT CO LTD) 5 July 2022 (2022-07-05) * the whole document * | 1-15 | |
| A | JP 2005 228533 A (HITACHI ENG SERVICE) 25 August 2005 (2005-08-25) * the whole document * | 1-15 | |

TECHNICAL FIELDS
SEARCHED      (IPC)

G06T

The present search report has been drawn up for all claims

| Place of search | Date of completion of the search | Examiner |
|---|---|---|
| Munich | 17 July 2023 | Tillier, Christophe |

EPO FORM 1503 03.82 (P04C01)

**ANNEX TO THE EUROPEAN SEARCH REPORT
ON EUROPEAN PATENT APPLICATION NO.**

EP 22 38 3296

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2023

| Patent document cited in search report | | Publication date | Patent family member(s) | | Publication date |
|---|---|---|---|---|---|
| US 2022057341 | A1 | 24-02-2022 | CN | 114170371 A | 11-03-2022 |
| | | | EP | 3958209 A1 | 23-02-2022 |
| | | | US | 2022057341 A1 | 24-02-2022 |
| CN 114708230 | A | 05-07-2022 | NONE | | |
| JP 2005228533 | A | 25-08-2005 | NONE | | |

EPO FORM P0459

For more details about this annex : see Official Journal of the European Patent Office, No. 12/82